Europäisches Patentamt

European Patent Office

Office européen des brevets

(19)

(11) Veröffentlichungsnummer: **0 170 766**
**B1**

(12) **EUROPÄISCHE PATENTSCHRIFT**

(45) Veröffentlichungstag der Patentschrift:
**20.09.89**

(21) Anmeldenummer: **85102357.2**

(22) Anmeldetag: **01.03.85**

(51) Int. Cl.⁴: **G 01 F 11/16**, G 01 F 11/00,
B 67 D 3/00

(54) Anordnung zur dosierten Abgabe von Flüssigkeiten.

(30) Priorität: **13.03.84 DE 3409142**

(43) Veröffentlichungstag der Anmeldung:
**12.02.86 Patentblatt 86/07**

(45) Bekanntmachung des Hinweises auf die Patenterteilung: **20.09.89 Patentblatt 89/38**

(84) Benannte Vertragsstaaten:
**AT BE CH DE FR GB IT LI LU NL SE**

(56) Entgegenhaltungen:
**DE–A– 2 544 671**
**FR–A– 2 489 785**
**GB–A– 1 339 341**
**GB–A– 2 030 962**
**US–A– 3 258 166**

(73) Patentinhaber: **Bosch-Siemens Hausgeräte GmbH**
**Hochstrasse 17**
**D-8000 München 80 (DE)**

**Coca-Cola Company**
**P.O.Drawer 1734**
**Atlanta Georgia 30301 (US)**

(72) Erfinder: **Krüger, Manfred**
**Bechstedter Weg 11**
**D-1000 Berlin 31 (DE)**

EP 0 170 766 B1

Jouve, 18, rue St-Denis, 75001 Paris, France

## Beschreibung

Die vorliegende Erfindung bezieht sich auf eine Anordnung zur dosierten Ausgabe von Flüssigkeiten aus einem Vorratsbehälter, die ein an der Austrittsöffnung des Vorratsbehälters lösbar befestigbares Dosierventil mit einer dessen Zuflußöffnungen und Austrittsöffnungen alternierend verschließenden bzw. öffnenden Steuerkolbenanordnung und einen Funktionsteil besitzt, dessen Zuflußöffnungen in der funktionsgerechten Arbeitslage dem Vorratsbehälter zugeordnet sind und der lediglich bei an den Vorratsbehälter erst- und einmalig angeflanschtem Dosierventil-Hauptteil mit diesem die funktionsgerechte Dosieranordnung bildet. Eine derartige Anordnung ist aus DE-A-2 544 671 bekannt.

Für die dosierte Abgabe von Teilmengen einer Flüssigkeit aus einer in einem Vorratsbehälter gelagerten größeren Menge sind eine Reihe von Maßnahmen bekannt. Je nach Eigenschaft der Flüssigkeiten werden unterschiedliche, entsprechend angepaßte und dimensionierte Dosiereinrichtungen verwendet. Die Dosiereinrichtungen können entweder unmittelbarer Bestandteil des Vorratsbehälters sein oder an diesen angeflanscht werden.

Die bekannten Behälter der genannten Art lassen sich üblicherweise ohne Probleme wiederholt verwenden. Nach dem völligen oder auch nur teilweisen Verbrauch des Inhalts kann dabei von der Ausgabeöffnung des Behälters die daran befestigte Dosiervorrichtung beispielsweise durch Lösen eines Schraubverschlusses abgenommen werden, so daß der Behälter wieder aufgefüllt werden kann. Für einige Anwendungsfälle kann aber diese Möglichkeit problematisch sein. Insbesondere dann ist diese Möglichkeit problematisch, wenn an die Beschaffenheit der auszugebenden Flüssigkeit besondere Beschaffenheits- und/oder Qualitätsanforderungen gestellt werden. Derartige Anforderungen werden beispielsweise gestellt im Zusammenhang mit Geräten für die Erstellung von Getränken aus einer Grundflüssigkeit und einem Getränkekonzentrat in Einzelportionen. Der Anbieter von Getränken ist bestrebt, dafür Sorge zu tragen, daß dem Verbraucher Getränke mit gleichbleibender Qualität zur Verfügung stehen. Werden diese Getränke fertiggestellt in Flaschen angeboten, so sind die Möglichkeiten für eine Qualitätskontrolle durch den Hersteller und den Anbieter sehr weitreichend. In dem Fall aber, in dem die endgültige Getränkeherstellung außerhalb des unmittelbaren Einflußbereiches des Getränkeherstellers bzw. Getränkeanbieters durch Mischen einer Grundflüssigkeit mit einem Getränkekonzentrat erfolgt, muß sichergestellt sein, daß diese Mischung den allgemein anerkannten und gewünschten Qualitätsstandard aufweist. Wesentliche Qualitätskriterien sind in der Art der Mischung, dem Mischungsverhältnis und insbesondere in den Eigenschaften des Getränkekonzentrats gegeben. Die eindeutige Zuordnung des Getränkekonzentrats zu einer Dosiervorrichtung hat demgemäß besondere Bedeutung.

Aus funktionstechnischen Gründen ist es zweckmäßig, die Dosierventileinheit dem Getränkeautomaten, durch den die Getränkemischung erstellt wird, zuzuordnen. In diesem Zusammenhang kann diese Dosiereinrichtung auch aus dem Gerät entnommen werden, um an der Austrittsöffnung des Vorratsbehälters befestigt zu werden. Es sind Dosierventile bekannt (DE-OS 25 44 671, DE-OS 30 33 874), bei welchen ein Kolbensystem mit einer Zuflußöffnung und einer Austrittsöffnung verwendet wird, wobei der durch einen Elektromagneten in seiner Hubstellung veränderbare Kolben als Dosierkammer ausgebildet ist und alternierend die Zuflußöffnung bzw. die Austrittsöffnung verschließt bzw. öffnet. Es ist nunmehr wünschenswert, Maßnahmen zu treffen, um das Dosierventil eindeutig einer Art von Vorratsbehältern und damit einem bestimmten Getränkekonzentrat zuzuordnen. Eine erhöhte Sicherheit ist dadurch gegeben, daß ein Funktionsteil des Dosierventils bautechnisch nicht diesem unmittelbar sondern der Austrittsöffnung des Vorratsbehälters zugeordnet wird. So ist es bekannt, den Bereich der Eintrittsöffnungen für das Dosierventil der Austrittsöffnung des Vorratsbehälters zuzuordnen. Ohne diesen Bestandteil ist das Dosierventil nicht funktionsfähig. Lediglich beim Einsatz des Dosierventils zusammen mit einem entsprechend ausgestatteten Vorratsbehälter ist die Funktionstüchtigkeit des Dosierventils gegeben. Um nunmehr den Mißbrauch von Konzentratbehältern weitestgehend dahingehend auszuschließen, daß diese wiederholt mit Getränkekonzentraten, deren Beschaffenheit möglicherweise zu einem ungenügenden Getränkeergebnis führen, zu sichern, ist es auch bekannt, das funktionstechnisch notwendige Element an der Austrittsöffnung des Vorratsbehälters beim Entfernen des Dosierventils zu zerstören. Diese Maßnahme bietet eine weitreichende Sicherheit für den bestimmungsgemäßen Einsatz von mit bestimmungsgemäßen Konzentraten gefüllten Vorratsbehältern in Getränkeautomaten. Die Gefahr einer mißbräuchlichen Veränderung der Sicherheitsmaßnahmen ist aber noch gegeben.

Aufgabe der vorliegenden Erfindung ist es, eine Anordnung zur dosierten Abgabe von Flüssigkeiten aus einem Vorratsbehälter unter Verwendung eines Dosierventils der eingangs beschriebenen Bauart bereitzustellen, durch welche einer mißbräuchlichen Verwendung des Vorratsbehälters für nachgefüllte Getränkekonzentrate in erheblichem Maße vorgebeugt ist.

Eine Anordnung, die ein Dosierventil mit alternierend angesteuerten Zuflußöffnungen verwendet, wobei die Zuflußöffnungen dem Vorratsbehälter zugeordnet sind, ist zur Erfüllung der aufgabengemäß gestellten Anforderungen erfindungsgemäß dadurch gekennzeichnet, daß der Funktionsteil vor dem Anflanschen des Dosierventil-Hauptteils (5, 25, 32) an den Vorratsbehälter (1) über Verbindungsstege (23, 38) mit einem Befestigungsflansch verbunden ist, über welche der Kraftfluß zum Ineinandergreifen von Verbindungselementen dieses Funktionsteils mit dem Dosierventil-Hauptteil geleitet ist, und daß diese Verbindungsstege als Sollbruchstellen ausgebildet sind, welche bei funktionsgerechter Anlage des Dosierventil-Hauptteils am Befestigungsflansch in die funktionsgerechte Arbeitslage zerstört sind.

Eine nach diesen Merkmalen ausgestaltete Anordnung bietet hervorragende Voraussetzungen, um die Wiederverwendbarkeit von Vorratsbehältern weitestgehend zu erschweren. Der Aufbau der Anordnung ist nämlich derart gewählt, daß bereits zum Zeitpunkt des funktionsrichtigen Einsatzes des Dosierventils an der Austrittsöffnung des Vorratsbehälters die Sollbruchstellen im Funktionsteil mit den Zuflußöffnungen zerstört sind. Dieser Funktionsteil wird aber, da er noch vor Zerstörung der als Sollbruchstellen ausgebildeten Stege mit dem Dosierventil in Eingriff gebracht wurde, von diesem in seiner funktionstüchtigen Lage gehalten. Beim Abnehmen des Dosierventils von der Ausgabeöffnung des Vorratsbehälters ist aber dieser Funktionsteil mit den Zuflußöffnungen zu entfernen bzw. er fällt automatisch vom Dosierventil ab. Eine wiederholte Verwendung ist deshalb nicht möglich, da nunmehr die als Sollbruchstellen zerstörten Stege nicht mehr funktionsfähig sind, den Funktionsteil der Zuflußöffnungen in Eingriff mit dem einzusetzenden Dosierventil zu bringen.

Nach einer bevorzugten Ausgestaltung ist die erfindungsgemäße Anordnung dadurch gekennzeichnet, daß der Funktionsteil mit den Dosierventil-Zuflußöffnungen über lösbare Verbindungselemente mit dem Dosierventil-Hauptteil verrastbar ist, daß die Verbindungsstege dieses Funktionsteils zu seinem Befestigungsflansch als bei für die funktionsgerechte Anlage des Dosierventils-Hauptteils an die Anlagefläche des Befestigungsflansches erforderlicher Zugkraft zerstörte Sollbruchstellen ausgebildet sind und daß der über die Verbindungsstege gebildete Abstand zwischen Anlageflächen des Funktionsteils an das Dosierventil-Hauptteil und des Befestigungsflansches an das Dosierventil-Hauptteil kleiner ist als der Abstand der entsprechenden Anlageflächen des Dosierventil-Hauptteils. Wird das Dosierventil bei einer derartig ausgestalteten Anordnung in die Austrittsöffnung des Vorratsbehälters eingesetzt, so findet — unter Nutzung der als Sollbruchstellen ausgebildeten Verbindungsstege — eine Verbindung zwischen diesem Dosierventil-Hauptteil und dem Funktionsteil mit den Dosierventil-Zuflußöffnungen statt. Erst durch ein weiteres Einschieben des Dosierventils in die Austrittsöffnung des Vorratsbehälters kommt das Dosierventil funktionsgerecht mit dem Befestigungsflansch zur Anlage. Bei diesem Vorgang werden die Verbindungsstege zwischen dem Funktionsteil der Dosierventil-Zuflußöffnungen und dem Befestigungsflansch überdehnt und zerstört. Eine Wiederverwendbarkeit ist ausgeschlossen. Beim Entfernen des Dosierventil-Hauptteils aus der Austrittsöffnung des Vorratsbehälters wird der elastisch verrastete Funktionsteil vom Dosierventil-Hauptteil durch den Befestigungsflansch abgestreift. Dieser fällt in den entleerten Vorratsbehälter.

Bevorzugterweise ist das Dosierventil-Hauptteil in diesem Zusammenhang über eine Schraubverbindung mit dem Befestigungsflansch in Richtung gegen den Funktionsteil mit den Zuflußöffnungen wirkend verbunden. Eine Schraubverbindung ist für diesen Anwendungsbereich ein funktionstechnisch günstiges Verbindungselement, welches auch ohne weiteres in der Lage ist, die für die Zerstörung der Sollbruchstellen erforderlichen Kräfte zu übertragen. Das dosierventilseitige Schraubverbindungsteil kann Bestandteil unmittelbar des Dosierventil-Hauptteils oder in Form einer Überwurfmutter ausgebildet sein.

Besonders einfach ist es, die Verbindungselemente zwischen dem Dosierventil-Hauptteil und dem Funktionsteil mit den Dosierventil-Zulauföffnungen als elastisch verrastbare und lösbare Rastelemente auszubilden.

Nach einer anderen bevorzugten Ausgestaltung ist die erfindungsgemäße Anordnung dadurch gekennzeichnet, daß der Funktionsteil mit den Dosierventil-Zuflußöffnungen mit dem Dosierventil-Hauptteil eingreifende Schraubverbindungselemente aufweist, daß die Verbindungsstege dieses Funktionsteils zu seinem Befestigungsflansch als bei für die funktionsgerechte Anlage des Dosierventil-Hauptteils an die Anlagefläche des Befestigungsflansches erforderlicher Anzugskraft zerstörte Sollbruchstellen ausgebildet sind und daß der Abstand von Bereichen der Schraubverbindungselemente des Dosierventil-Hauptteils und dessen Anlageflächen an den Betätigungsflansch kleiner ist als der Abstand von Bereichen der Schraubverbindungselemente des Funktionsteils zur Anschlagfläche des Befestigungsflansches. Bei einer derart ausgestalteten Anordnung greift beim Einfügen des Dosierventil-Hauptteils dieser in die Schraubverbindungselemente des Funktionsteils mit den Dosierventil-Zuflußöffnungen durch Unterstützung der als Sollbruchstellen ausgebildeten Zwischenstege ein. Um die funktionsgerechte Anlage des Dosierventil-Hauptteils an die Anlagefläche des Befestigungsflansches zu erzielen, ist es aber erforderlich, den Dosierventil-Hauptteil weiter über die Schraubverbindungselemente an den Funktionsteil mit den Dosierventil-Zuflußöffnungen anzuziehen. Dabei werden die als Sollbruchstellen ausgebildeten Zwischenstege zerstört. Der Funktionsteil stützt sich in der funktionsgerechten Lage unmittelbar am Befestigungsflansch ab. Um die beim weiteren Anziehen bzw. beim Losdrehen des Dosierventils auftretenden Drehmomente abzufangen, sind zwischen dem Funktionsteil mit den Dosierventil-Zuflußöffnungen und dem Befestigungsflansch Anschläge angeordnet. Nach dem Entfernen des Dosierventil-Hauptteils aus der Austrittsöffnung des Vorratsbehälters durch Herausdrehen aus dem Funktionsteil mit den Dosierventilzuflußöffnungen fällt dieser Funktionsbereich ab, und zwar in den entleerten Vorratsbehälter und ist somit für eine Wiederverwendung ungeeignet.

Nach den Merkmalen der Erfindung ausgestaltete Ausführungsbeispiele sind anhand der Zeichnung im folgenden näher beschrieben.

Es zeigen

Fig. 1 eine an einen Vorratsbehälter angeflanschte Dosiereinrichtung im Schnitt,

Fig. 2 bis 4 eine Draufsicht, eine Seitenansicht und eine Seitenansicht im Schnitt eines Funktionsbereichs der Dosierventil-Zuflußöffnungen,

Fig. 5 eine Seitenansicht des zugehörigen Dosierventil-Hauptteils sowie

Fig. 6 bis 8 eine Draufsicht, eine Seitenansicht und eine geschnittene Seitenansicht einer weiteren Ausführungsform des Funktionsteils mit den Dosierventil-Ausflußöffnungen und

Fig. 9 eine Seitenansicht eines diesem Funktionsteil zugeordneten Dosierventil-Hauptteils.

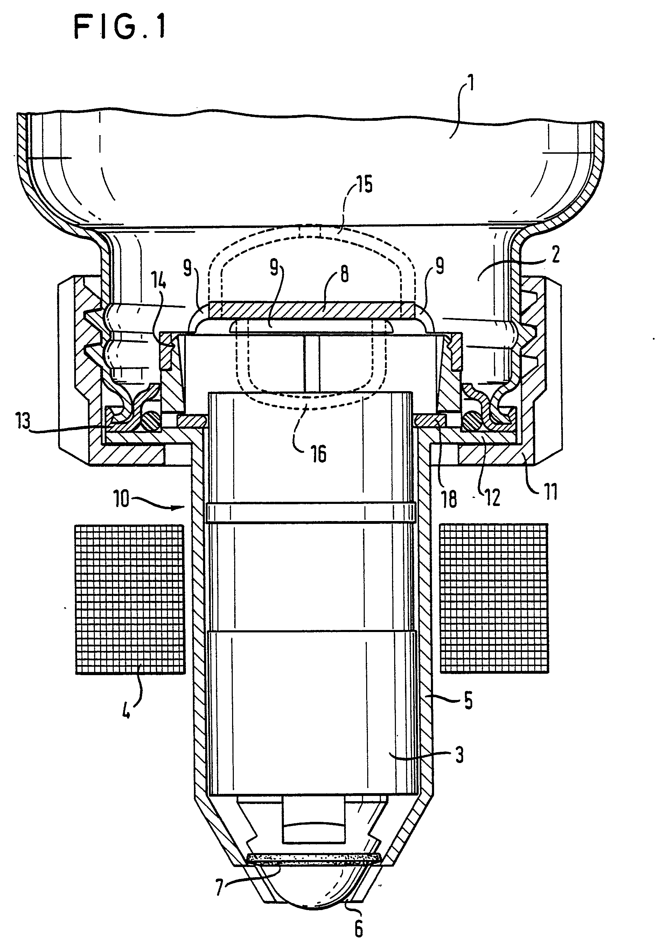

In vereinfachter Darstellung ist in Fig. 1 eine Anordnung zum portionsweisen Ausgeben Getränkekonzentraten dargestellt, welche in Vorratsbehältern 1 gelagert sind. An der Austrittsöffnung 2 dieses Vorratsbehälters 1 ist ein Dosierventil angeordnet, dessen Kolben 3 entgegen der auf ihn wirkenden Schwerkraft bei Erregung eines Elektromagneten 4 nach oben verstellbar ist. Zu diesem Zweck ist der untere Teil des Kolbens aus ferromagnetischem Material gefertigt, so daß das System als Tauchankermagnetsystem wirkt.

Der Kolben ist in einem Gehäuse 5 angeordnet, welches in seinem unteren kegligen Bereich Austrittsöffnungen aufweist, welche in der dargestellten Lage d. h. bei nicht-erregtem Elektromagnet 4 durch einen Dichtring 7 verschlossen ist. Oberhalb des Kolbens 3 ist ein Funktionsteil 8 mit den Dosierventil-Zuflußöffnungen 9 angeordnet. Durch diese Dosierventil-Zuflußöffnungen kann aus dem Vorratsbehälter 1 das Getränkekonzentrat in den Dosierventil-Raum bis zum Dichtungsring 7 hin gelangen, da der Kolben 3 hohlzylindrisch ausgebildet ist. Ist der Elektromagnet 4 erregt, dann ist der Kolben 3 nach oben angehoben und legt sich dichtend an den Funktionsteil 8 mit den Dosierventil-Zuflußöffnungen 9. Dadurch wird der Zufluß von Getränkekonzentrat aus dem Vorratsbehälter 1 in den Dosierventil-Raum unterbrochen. Dagegen ist nunmehr der Dichtring 7 von der unteren Austrittsöffnung 6 des Dosierventils abgehoben, so daß das im Dosierventil-Raum vorhandene Getränkekonzentrat hochgenau portioniert infolge seiner Schwerkraft nach unten aus der Austrittsöffnung 6 austreten kann. Nach der Entleerung des Dosierventil-Raums wird der Elektromagnet 4 wieder aberregt und der Dosierventil-Raum wird über die Dosierventil-Zuflußöffnungen 9, die nunmehr wieder freigegeben sind, aus dem Vorratsbehälter 1 mit Getränkekonzentrat nachgefüllt.

Wesentliche Bestandteile der Dosierventil-Anordnung sind somit der in dem Gehäuse 5 verschieblich gelagerte, Steuerfunktionen übernehmende Kolben 3 sowie die wahlweise alternierend durch den Steuerkolben 3 schließbaren und zu öffnenden Zuflußöffnungen 9 und Austrittsöffnungen 6. Das Dosierventil ist aufbautechnisch nunmehr unterteilt in einen vom Vorratsbehälter abnehmbaren Dosierventil-Hauptteil 10, bestehend aus dem Gehäuse 5 mit seiner Austrittsöffnung 6 sowie dem Kolben 3, und dem Funktionsteil 8 mit den Dosierventil-Zuflußöffnungen 9, welcher ursprünglicher Bestandteil des Vorratsbehälters 1 ist. Der Dosierventil-Hauptteil 10 ist durch ein in Form einer Überwurfmutter ausgebildeten Schraubbuchse 11 über ein Schraubgewinde mit dem Hals des Vorratsbehälters 1 verbunden, wobei sich eine Anlagefläche 12 des Dosierventil-Gehäuses 5 an einem Befestigungsflansch 13 abstützt.

In der dargestellten Lage, d. h. bei funktionsgerecht an den Vorratsbehälter 1 über die Schraubverbindung 11 angeflanschtem Dosierventil-Hauptteil 10, ist der ursprünglich über als Sollbruchstellen ausgebildete Zwischenstege mit dem Befestigungsflansch 13 verbundene Funktionsteil 8 mit den Dosierventil-Zuflußöffnungen 9 von diesem Befestigungsflansch 13 abgetrennt. Diese Abtrennung ist erfolgt, nachdem über Rastelemente 14 dieser Funktionsteil 8 elastisch mit dem Gehäuse 5 des Dosierventil-Hauptteils 10 verbunden war, und zwar dadurch, daß bei endgültigem Anziehen des Dosierventil-Hauptteils 10 zur Anlage an den Befestigungsflansch 13 die Oberkante des Dosierventil-Gehäuses 5 gegen den Funktionsteil 8 gedrückt hat, so daß die ursprünglich diesen Funktionsteil 8 mit dem Befestigungsflansch verbindenden Zwischenstege durch Überdehnung zerstört sind.

Durch domartige Ausbildungen 15, 16 des Funktionsteils 8 mit den Dosierventil-Zuflußöffnungen 9 ist der nutzbare Dosierraum des Dosierventil-Systems vergrößerbar oder verkleinerbar. Damit ist dieser dem Vorratsbehälter 1 zugeordnete Teil im wesentlichen bestimmend für die Dosiermenge. Da die Beschaffenheit des Getränkekonzentrats im wesentlichen — wenn nicht ausschließlich — bestimmend ist für die Bestimmung der Dosiermenge, ist die unmittelbare Zuordnung dieses Funktionsteils zum Vorratsbehälter und damit zum Getränkekonzentrat besonders zweckmäßig.

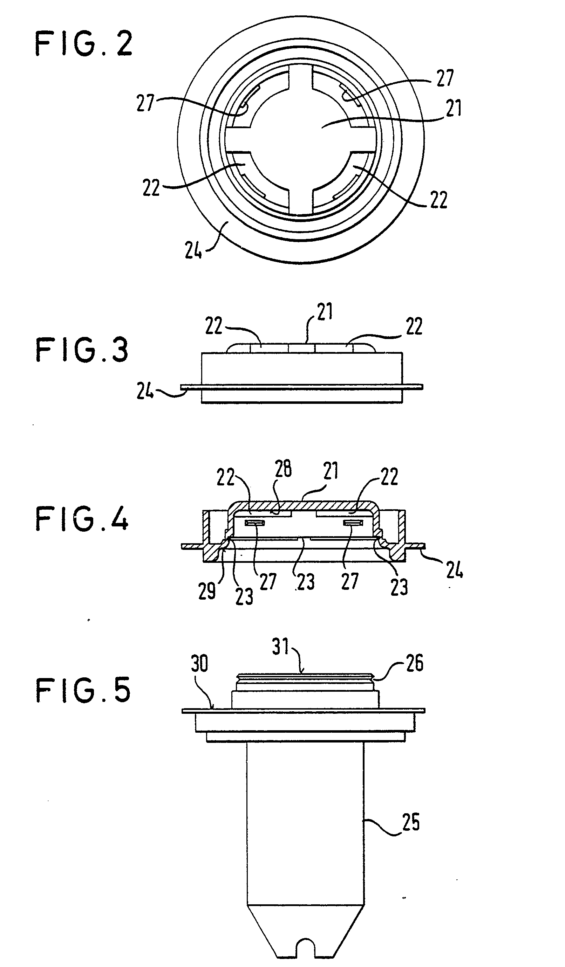

Das Ausführungsbeispiel nach den Figuren 2 bis 5 entspricht im wesentlichen der Anordnung gemäß Figur 1. In diesem Fall ist noch zu sehen, daß der Funktionsteil 21 mit den Dosierventil-Zuflußöffnungen 22 über Stege 23 mit dem Befestigungsflansch 24 verbunden ist. Das Dosierventilgehäuse 25 ist über eine Rasteinkerbung 26 mit Rastvorsprüngen 27 des Funktionsteils 21 verrastbar. Da der Abstand der Anlageflächen 28 und 29 des Funktionsteils 21 bzw. des Befestigungsflansches 24 kleiner gewählt ist als der Abstand der Anlageflächen 30, 31 des Dosierventil-Gehäuses 25 werden die Zwischenstege 23 beim Annähern der Anlageflächen 29 und 30 als Sollbruchstellen überdehnt und zerstört. Beim Abnehmen des Dosierventilgehäuses 25 wird der Funktionsteil 21 durch den Befestigungsflansch 24 vom Dosierventilgehäuse 25 entgegen der Verrastung durch die Rastelemente 26 und 27 abgestreift. Der Funktionsteil 21 fällt in den Vorratsbehälter zurück.

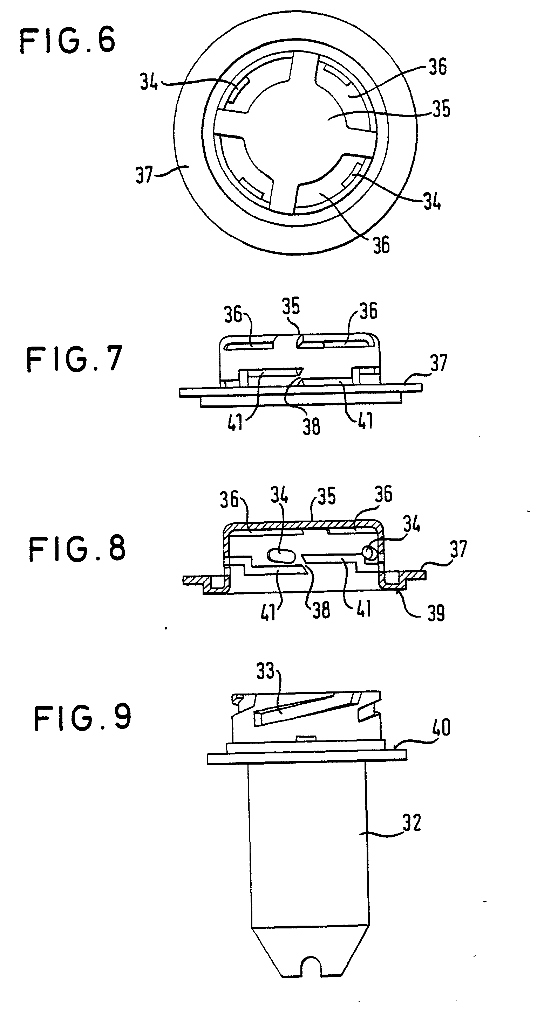

Bei der Ausführungsform gemäß den Figuren 6 bis 9 wird das Dosierventil-Gehäuse 32 über Schraubengänge 33 mit Schraubansätzen 34 des Funktionsteils 35 der Dosierventil-Zuflußöffnungen 36 in Eingriff gebracht und verschraubt. Zwischen dem Funktionsteil 35 und dessen Befestigungsflansch 37 sind Zwischenräume 41, bis sie über Verbindungsstege 38 überbrückt sind. Beim Anziehen des Dosierventils-Gehäuses 32 über die Gewindeelemente 33 und 34 an den Funktionsteil 35 stützen sich die Anlageflächen 39 des Befestigungsflansches 37 und die Anlagefläche 40 des Dosierventil-Gehäuses 32 gegeneinander ab, so daß ein Kraftfluß über die Stege 38 zwischen dem Funktionsteil 35 und dem Befestigungsflansch 37 ausgeübt wird, welcher diese Stege 38 zerstört. Die Zwischenräume 41 zwischen dem Funktionsteil 35 und dem Befestigungsflansch 37 werden dabei aufgehoben und der Funktionsteil 35 stützt sich unmittelbar auf dem Befestigungsflansch 37 ab. Beim Herausschrauben des Dosierventil-Gehäuses 32 aus dem Funktionsteil 35 fällt dieses in den Vorratsbehälter zurück. Damit ist eine nochmalige Schraubverbindung nicht mehr möglich.

Da das vom Vorratsbehälter 1 abgenommene Dosierventil-Gehäuse 5 nach oben offen ist, wird in diesem Zustand einem Herausfallen des Kolbens 3 durch einen Haltering 18 entgegengewirkt.

## Patentansprüche

1. Anordnung zur dosierten Abgabe von Flüssigkeiten aus einem Vorratsbehälter (1), die ein an der Austrittsöffnung (2) des Vorratsbehälters lösbar befestigbares Dosierventil mit einer dessen Zuflußöffnungen (9, 22, 36) und Austrittsöffnungen (6) alternierend verschließenden bzw. öffnenden Steuerkolbenanordnung und einen Funktionsteil (8, 21, 35) besitzt, dessen Zuflußöffnungen (9, 22, 36) in der funktionsgerechten Arbeitslage dem Vorratsbehälter (1) zugeordnet sind und der lediglich bei an den Vorratsbehälter erst- und einmalig angeflanschtem Dosierventil-Hauptteil (5, 25, 32) mit diesem die funktionsgerechte Dosieranordnung bildet, dadurch gekennzeichnet, daß der Funktionsteil (8, 21, 35) vor dem Anflanschen des Dosierventil-Hauptteils (5, 25, 32) über Verbindungsstege (23, 38) mit einem Befestigungsflansch (13, 24, 37) verbunden ist, über welche der Kraftfluß zum Ineinandergreifen der Verbindungselemente (14, 26, 33, 34) dieses Funktionsteils (8, 21, 35) mit dem Dosierventil-Hauptteil (5, 25, 32) geleitet ist, und daß diese Verbindungsstege (23, 38) als Sollbruchstellen ausgebildet sind, welche bei funktionsgerechter Anlage des Dosierventil-Hauptteils (5, 25, 32) am Befestigungsflansch (13, 24, 37) in der funktionsgerechten Arbeitslage zerstört sind.

2. Anordnung nach Anspruch 1, dadurch gekennzeichnet, daß der Funktionsteil (8, 21) mit den Dosierventil-Zuflußöffnungen (9, 22) über lösbare Verbindungselemente (14, 26, 27) mit dem Dosierventil-Hauptteil (5, 25) verrastet ist, daß die Verbindungsstege (23) dieses Funktionsteils (8, 21) zu seinem Befestigungsflansch (13, 24) als bei für die funktionsgerechte Anlage des Dosierventil-Hauptteils (5, 25) an die Anlagefläche (29) des Befestigungsflansches (24) erforderlicher Zugkraft zerstörte Sollbruchstellen ausgebildet sind und daß der über die Verbindungsstege (23) gebildete Abstand zwischen Anlageflächen (28, 29) dieses Funktionsteils (21) an das Dosierventil-Hauptteil (25) und des Befestigungsflansches (24) an das Dosierventil-Hauptteil (25) kleiner ist als der Abstand der entsprechenden Anlageflächen (30, 31) des Dosierventil-Hauptteils (25).

3. Anordnung nach Anspruch 2, dadurch gekennzeichnet, daß das Dosierventil-Hauptteil über eine Schraubverbindung (11) mit dem Befestigungsflansch (12) in Richtung gegen den Funktionsteil (8) mit den Dosierventil-Zuflußöffnungen (9) wirkend verbunden ist.

4. Anordnung nach einem der Ansprüche 2 oder 3, dadurch gekennzeichnet, daß die Verbindungselemente (14, 26, 27) zwischen dem Dosierventil-Hauptteil (5, 25) und dem Funktionsteil (8, 21) mit den Dosierventil-Zuflußöffnungen (9, 22) elastisch verrastbare und lösbare Rastelemente sind.

5. Anordnung nach Anspruch 1, dadurch gekennzeichnet, daß der Funktionsteil (35) mit den Dosierventil-Zuflußöffnungen (36) mit dem Dosierventil-Hauptteil (32) eingreifende Schraubverbindungselement (34) aufweist, daß die Verbindungsstege (38) dieses Funktionsteils (35) zu seinem Befestigungsflansch (37) als bei für die Funktionsgerechte Anlage des Dosierventil-Hauptteils (32) an die Anlagefläche (39) des Befestigungsflansches (37) erforderlicher Anzugskraft zerstörte Sollbruchstellen ausgebildet sind, und daß der Abstand von Bereichen der Schraubverbindungselemente (33) des Dosierventil-Hauptteils (32) und dessen Anlagefläche (40) an den Befestigungsflansch (37) kleiner ist als der Abstand von Bereichen der Schraubverbindungselemente (34) des Funktionsteils (35) zur Anlagefläche (39) des Befestigungsflansches (37).

6. Anordnung nach Anspruch 3, dadurch gekennzeichnet, daß zwischen dem Funktionsteils (35) mit den Dosierventil-Zuflußöffnungen (36) und dem Befestigungsflansch (39) Anschläge gegen gegenseitige Verdrehung angeordnet sind.

7. Anordnung nach einem der Ansprüche 1 bis 6, dadurch gekennzeichnet, daß die Ausmaße des Funktionsteils (8, 21, 35) der Dosierventil-Zuflußöffnungen (9, 22, 36) zumindest in Teilbereichen die Ausmaße des Befestigungsflansches (13, 24, 37) überdecken.

## Claims

1. Arrangement for the metered delivery of liquids from a supply container (1), which arrangement possesses a metering valve, which is detachably fastenable at the outflow opening (2) of the supply container, with a control piston arrangement, which alternatingly closes the inflow openings (9, 22, 36) and outflow openings (6) of the valve, and a functional part (8, 21, 35), the inflow openings (9, 22, 36) of which are in the functionally correct operating position associated with the supply container (1) and which merely in the case of the main metering valve part (5, 25, 32) flanged to the supply container for the first and only time forms the functionally correct metering arrangement with this valve part, characterised thereby, that the functional part (8, 21, 35), before the main metering valve part (5, 25, 32) is flanged on, is connected by way of connecting webs (23, 38) with a fastening flange (13, 24, 37), by way of which the force flow for the interengagement of the connecting elements (14, 26, 33, 34) of this functional part (8, 21, 35) with the main metering valve part (5, 25, 32) is conducted, and that these connecting webs (23, 38) are constructed as predetermined frangible places which are destroyed in the functionally correct operating position in the case of the functionally correct bearing of the main metering valve part (5, 25, 32) at the fastening flange (13, 24, 37).

2. Arrangement according to claim 1, characterised thereby, that the functional part (8, 21) with the metering valve inflow openings (9, 22) is detented by way of detachable connecting elements (14, 26, 27) with the main metering valve part (5, 25), that the connecting webs (23) of this functional part (8, 21) to its fastening flange (13, 24) are constructed as predetermined frangible places which are destroyed in the case of the tension force required for the functionally correct bearing of the main metering valve part (5, 25) against the bearing surface (29) and that the spacing formed by way of the connecting webs (23) between bearing surfaces (28, 29) of this functional part (21) against the main metering valve part (25) and of the fastening flange (24) against the main metering valve part (25) is smaller than the spacing of the corresponding bearing surfaces (30, 31) of the main metering valve part (25).

3. Arrangement according to claim 2, characterised thereby, that the main metering valve part is connected by way of a screw connection (11) with the fastening flange (12) acting in direction against the functional part (8) with the metering valve inflow openings (9).

4. Arrangement according to one of the claims 2 and 3, characterised thereby, that the connecting elements (14, 26, 27) between the main metering valve part (5, 25) and the functional part (8, 21) with the metering valve inflow openings (9, 22) are elastically detentable and disengageable detent elements.

5. Arrangement according to claim 1, characterised thereby, that the functional part (35) with the metering valve inflow openings (36) displays threaded connecting elements (34) engaging with the main metering valve part (32), that the connecting webs (38) of this functional part (35) to its fastening flange (37) are constructed as predetermined frangible places which are destroyed in the case of the tightening force required for the functionally correct bearing of the main metering valve part (32) against the bearing surface (39) of the fastening flange (37) and that the spacing of regions of the threaded connecting elements (33) of the main metering valve part (32) and its bearing surface (40) at the fastening flange (37) is smaller than the spacing of regions of the threaded connecting elements (34) of the functional part (35) to the bearing surface (39) of the fastening flange (37).

6. Arrangement according to claim 3, characterised thereby, that abutments against relative rotation are arranged between the functional part (35) with the metering valve inflow openings (36) and the fastening flange (39).

7. Arrangement according to one of the claims 1 to 6, characterised thereby, that the extents of the functional part (8, 21, 35) of the meeting valve inflow openings (9, 22, 36) at least in partial regions cover the extents of the fastening flange (13, 24, 37).

**Revendications**

1. Dispositif pour la distribution dosée de liquides à partir d'un réservoir (1), qui possède une valve de dosage, pouvant être fixée de manière amovible à l'orifice de sortie (2) du réservoir et comprenant un agencement de piston distributeur fermant et ouvrant en alternance les orifices d'admission (9, 22, 36) et de sortie (6) de cette valve, et un élément fonctionnel (8, 21, 35) dont les orifices d'admission (9, 22, 36) sont associés au réservoir (1) dans la position de travail fonctionnellement adéquate et qui forme avec la partie principale (5, 25, 32) de la valve de dosage le dispositif de dosage fonctionnellement adéquat, uniquement lorsque cette partie est bridée définitivement sur le réservoir, caractérisé par le fait qu'avant le bridage de la partie principale (5, 25, 32) de la valve de dosage, l'élément fonctionnel (8, 21, 35) est relié à une collerette de fixation (13, 24, 37) par des barrettes de liaison (23, 38) qui transmettent les forces pour l'accouplement des éléments de liaison (14, 26, 33, 34) de cet élément fonctionnel (8, 21, 35) avec la partie principale (5, 25, 32) de la valve de dosage, et que ces barrettes de liaison (23, 38) sont réalisées comme emplacements de rupture qui sont détruits lorsque la partie principale (5, 25, 32) de la valve de dosage est appliquée de manière fonctionnellement adéquate contre la collerette de fixation (13, 24, 37) dans la position de travail fonctionnellement adéquate.

2. Dispositif selon la revendication 1, caractérisé par le fait que l'élément fonctionnel (8, 21), comprenant les orifices d'admission (9, 22) de la valve de dosage, est encliqueté avec la partie principale (5, 25) de la valve de dosage par des éléments de liaison (14, 26, 27) libérables, que les barrettes de liaison (23) reliant cet élément fonctionnel (8, 21) à sa collerette de fixation (13, 24) sont réalisées sous forme d'emplacements de rupture qui sont détruits par la force de serrage nécessaire à l'application fonctionnellement adéquate de la partie principale (5, 25) de la valve de dosage contre la surface d'appui (29) de la collerette de fixation (24), et que la distance, établie par les barrettes de liaison (23), entre les surfaces d'appui (28, 29) de cet élément fonctionnel (21) contre la partie principale (25) de la valve de dosage et de la collerette de fixation (24) contre la partie principale (25) de la valve de dosage, est inférieure à la distance entre les surfaces d'appui (30, 31) correspondantes de la partie principale (25) de la valve de dosage.

3. Dispositif selon la revendication 2, caractérisé par le fait que la partie principale de la valve de dosage est reliée à la collerette de fixation (12) par une liaison par vissage (11), de manière à agir contre l'élément fonctionnel (8) comprenant les orifices d'admission (9) de la valve de dosage.

4. Dispositif selon la revendication 2 ou 3, caractérisé par le fait que les éléments de liaison (14, 26, 27) entre la partie principale (25) de la valve de dosage et l'élément fonctionnel (8, 21) comprenant les orifices d'admission (9, 22) de la valve de dosage, sont des éléments d'encliquetage élastiquement encliquetables et libérables.

5. Dispositif selon la revendication 1, caractérisé par le fait que l'élément fonctionnel (35), comprenant les orifices d'admission (36) de la valve de dosage, présente des éléments (34) de liaison par vissage qui sont en contact avec la partie principale (32) de la valve de dosage, que les barrettes de liaison (38) reliant cet élément fonctionnel (35) à sa collerette de fixation (37) sont réalisées sous forme d'emplacements de rupture qui sont détruits par la force de serrage nécessaire à l'application fonctionnellement adéquate de la partie principale (32) de la valve de dosage contre la surface d'appui (39) de la collerette de fixation (37), et que la distance entre des zones des éléments (33) de liaison par vissage de la partie principale (32) de la valve de dosage et la surface d'appui (40) de cette partie contre la collerette de fixation (37) est inférieure à la distance entre des zones des éléments (34) de liaison par vissage de l'élément fonctionnel (35) et la surface d'appui (39) de la collerette de fixation (37).

6. Dispositif selon la revendication 3, caractérisé par le fait que des butées sont prévues pour empêcher une rotation relative entre l'élément fonctionnel (35), comprenant les orifices d'admission (36) de la valve de dosage, et la collerette de fixation (39).

7. Dispositif selon l'une des revendications 1 à 6, caractérisé par le fait que les dimensions de l'élément fonctionnnel (8, 21, 35) comprenant les orifices d'admission (9, 22, 36) de la valve de dosage recouvrent du moins dans des zones partielles les dimensions de la collerette de fixation (13, 24, 37).

# FIG.1

FIG. 2

27    27    21    22    22    24

FIG. 3

22    21    22    24

FIG. 4

22    28    21    22
29    23    27    23    27    23    24

FIG. 5

30    31    26    25

FIG.6

FIG.7

FIG.8

FIG.9